# EUROPEAN PATENT APPLICATION

(11) **EP 1 382 738 A1**
(43) Date of publication of application: **21.01.2004**
(21) Application number: 03006398.6
(22) Date of filing: 20.03.2003
(51) Int. Cl.: D21F 3/02, B29D 29/00, B29C 67/24, B29B 15/12

(54) **Belt for paper making machine and manufacturing method therefor**

(30) Priority: 19.07.2002 US 199946
(71) Applicant: ICHIKAWA CO.,LTD., Tokyo (JP)
(72) Inventor: Ishino, Atsushi, Nishi-Ibaraki-gun, Ibaraki-ken (JP)
(74) Representative: Hoarton, Lloyd Douglas Charles

(57) **Abstract**

The object of the present invention is to reduce the time, cost, and danger in manufacturing polyurethane for a belt for a papermaking machine at a high temperature. A belt for a papermaking machine according to the present invention comprises a base body and polyurethane and said polyurethane comprises an isocyanate-terminated urethane prepolymer and a hardener containing a dimethylthiotoluenediamine. The equivalent ratio of an active hydrogen group of said hardener and an isocyanate group of said urethane prepolymer in said polyurethane is in the range of 0.9 to 1.10 so that a belt for a papermaking machine having well-balanced crack resistance, abrasion resistance, and permanent set resistance may be obtained.

## Description

### [Field of the invention]

The present invention relates to a belt for a papermaking machine (hereinafter also called a "belt").

### [Background of the invention]

A belt for a papermaking machine comprising a base body and polyurethane is used in various processes of a papermaking machine, as is well-known. That is, a shoe press belt and transfer belt are used in the press part of a papermaking process, and a soft calender belt is used in the calender part of a papermaking process.

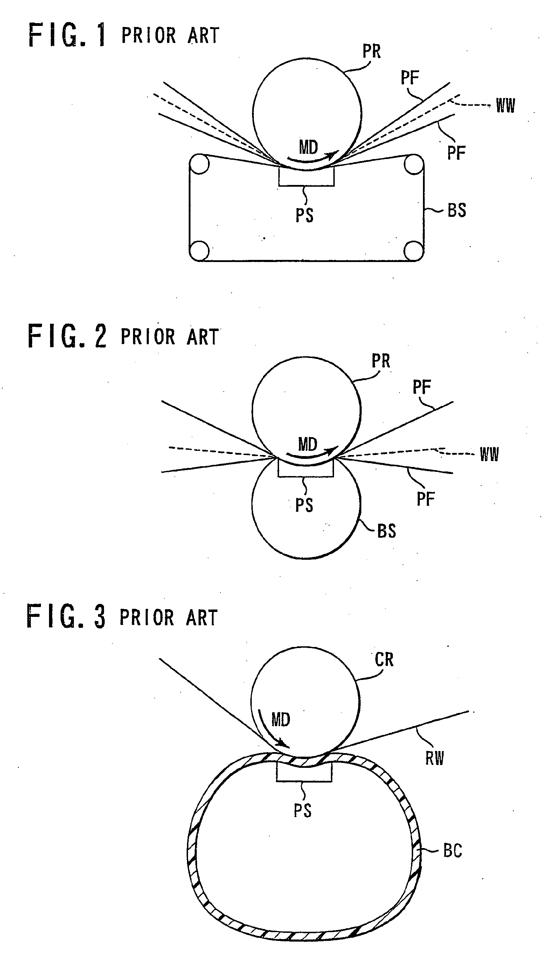

A typical structure of a papermaking machine for which these belts are used will be explained based on Figs. 1, 2, and 3.
Fig. 1 and Fig. 2 show an apparatus which is used for a press part and Fig. 3 shows an apparatus which is used for a calender part respectively.

The apparatus of Fig. 1 and 2 is a shoe press apparatus. This shoe press apparatus has a press part comprising a press roll PR and a shoe PS. A wet paper web WW, a pair of felts PF, PF sandwiching the wet paper web WW, and belt BS are arranged in this press part and by rotating the press roll PR, a wet paper web WW, felts PF, PF, and belt BS run and pass the press part.
In this connection, an arrow MD in the figure shows the direction of rotation of the press roll PR.
This shoe press apparatus is roughly divided into two types; a shoe press apparatus for a relatively long belt BS which is shown in Fig. 1 and a shoe press apparatus for a relatively short belt BS which is shown in Fig. 2
Quite a lot of patent applications have been made for such a shoe press apparatus and belt up to the present.

Moreover, a papermaking machine which is not shown in the figures, wherein a wet paper web is supported by a belt-shaped body in each process has been developed in recent years. This papermaking machine is known to those skilled in the art as a closed draw papermaking machine which does not have an open draw. A transfer belt is researched and developed as a belt for the press part of this closed draw papermaking machine. A typical example of this transfer belt is disclosed in the United States Patent No. 5298124.

In the case of a apparatus of the calender part shown in Fig. 3, a belt for calender BC and rough surface paper RW which is a paper material are sandwiched in the press part comprising a calender roll CR and shoe PS. The belt BC and rough surface paper RW pass the press part with the rotation of the calender roll CR.
A belt for this calender part BC is disclosed in the United States Patent No. 5836242.

Since these belts have characteristic structures which are adapted to the used part, the structure of one belt is not necessarily simply applicable to the structure of the other belt.
However, these belts has a common basic structure wherein they comprise a base body for imparting strength to the belt as a whole and polyurethane mounted to the base body.
Therefore, when these belts are manufactured, they are through the common process of spreading liquid polyurethane over a base body.

Conventionally, a material obtained from a reaction of an isocyanate-terminated urethane prepolymer and a hardener containing a methylene-bis-ortho-chloro-aniline (3, 3' -dichloro-4, 4' -diaminodiphenylmethane)(hereinafter called a "MBOCA" is used as this polyurethane.

However, MBOCA is solid at a room temperature, and the melting point is not less than 98°C.
Therefore, MBOCA needs to be melted first of all to obtain the polyurethane, and this process may become time-consuming and raise the manufacturing cost.

On the other hand, when melted MBOCA is mixed with an urethane prepolymer, the urethane prepolymer also needs to be heated at about 70 to 80°C to prevent solidification and extraction of MBOCA which is caused by the decline of the temperature of MBOCA.
Therefore, since it is necessary to handle a liquid mixture at the temperature of nearly 80°C, the danger of the work is very high.
Moreover, since the mixture is at a high temperature and the reaction of the urethane prepolymer and MBOCA is fast and curing is caused at an early stage, much time is not allowed for the work.

The object of the present invention is to solve these conventional problems and provide a belt for a papermaking machine which has excellent characteristics.

### [Summary of the invention]

The present invention has solved the above-mentioned problems by means of a belt for a papermaking machine comprising a base body and polyurethane, wherein the polyurethane comprises an isocyanate-terminated urethane prepolymer and a hardener containing a dimethylthiotoluenediamine.

In this connection, the preferable equivalent ratio of an active hydrogen group of said hardener and an isocyanate group of said urethane prepolymer in said polyurethane is in the range of 0.9 to 1.10.

The method of manufacturing the belt for papermaking machine according to the present invention, comprising a base body and polyurethane, comprises the steps of manufacturing a base body, mixing an isocyanate-terminated urethane prepolymer and a hardener containing a dimethylthiotoluenediamine for obtaining liquid polyurethane and spreading said liquid polyurethane over said base body, and curing it.

In this connection, the preferable equivalent ratio of an active hydrogen group of said hardener and an isocyanate group of said urethane prepolymer in said polyurethane is in the range of 0.9 to 1.10.

Moreover, it is preferable that after mixing said urethane prepolymer and hardener, both are reacted at the temperature of 10 to 60°C for at least not less than 30 minutes and thereafter, they are reacted at the temperature of 100 to 150°C in the process of curing said liquid polyurethane.

### [Brief description of drawings]

Fig. 1 is a schematic view of a shoe press apparatus which is suitable for a comparatively long belt.

Fig. 2 is a schematic view of a shoe press apparatus which is suitable for a comparatively short belt.

Fig. 3 is a schematic view of a conventional soft calender apparatus of a papermaking machine.

Fig. 4 is a cross-sectional view taken on a cross machine direction of a belt for papermaking machine.

Fig. 5 is a cross-sectional view taken on a cross machine direction of a belt used for a press part of a papermaking machine.

Fig. 6 is a cross-sectional view taken on a cross machine direction of a belt used for a press part of a papermaking machine.

Fig. 7 is a chemical formula of a dimethylthiotoluenediamine according to the present invention.

Fig. 8 is a chemical formula of a dimethylthiotoluenediamine according to the present invention.

Fig. 9 is an explanatory view of the structure of a concrete example of a belt according to the present invention.

Fig. 10 is a schematic view of a apparatus used in Experiment 1 for a belt according to the present invention.

Fig. 11 is a schematic view of a apparatus used in Experiment 2 for a belt according to the present invention.

Fig. 12 is an illustration of experiment results of a belt according to the present invention.

Fig. 13 is an illustration of experiment results of a belt according to the present invention.

### [Detailed description of the preferred embodiment]

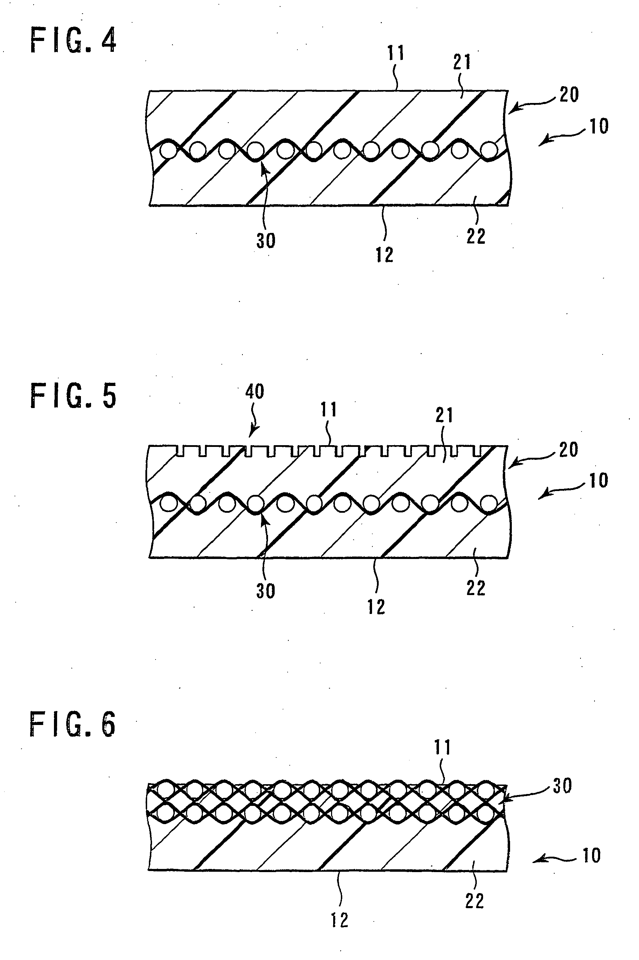

The basic structure of a belt for papermaking machine according to the present invention will be explained based on Fig. 4.
In Fig. 4, a belt 10 comprises a base body 30 and polyurethane 20 in an endless shape, having an outer surface 11 which is in contact with a wet paper web or paper material and an inner surface 12 which is in contact with a papermaking machine such as a shoe, etc.

The base body 30 has a structure for imparting strength to the belt 10. A base fabric woven by yarn materials of a machine direction and cross machine direction is shown in the figure. However, a base body 30 may have various structures for imparting strength to the belt 10 such as yarn materials of a machine direction and cross machine direction which are not woven, but overlapped, or film or knitting or a belt-shaped body of large width which is made by winding a belt-shaped body of small width in spiral.

The polyurethane is provided inside the base body 30 and on both sides of the base body 30. Said outer surface 11 and inner surface 12 comprise polyurethane 21 and 22.
For manufacturing a belt, a base body 30 and liquid polyurethane are prepared, and the liquid polyurethane is spread over the base body 30 and cured. A conventional process may be properly adopted in the process of spreading the liquid polyurethane over this base body 30 and curing it.

For example, after liquid polyurethane is impregnated into the outer side of a base body and cured and a desired height is obtained, the inner and outer sides of the base body 30 are reversed and a side of the base body 30 which is made an outer side by this reversal and on which said polyurethane is not formed is impregnated with the liquid polyurethane and cured and a desired height is achieved and the belt may be obtained.
This manufacturing method is often used to manufacture a comparatively long belt shown in Fig. 1.

On the other hand, in the case of a comparatively short belt shown in Fig. 2, it is difficult to reverse a base body 30. Therefore, a manufacturing method wherein polyurethane is spread over both sides of a base body 30 in a cylinder mandrel without reversing the base body 30 may be chosen in this case.

Concretely, liquid polyurethane is spread over the mandrel, and cured. A base body 30 is placed on this polyurethane. A liquid polyurethane is spread over the upper surface of the base body 30. This liquid polyurethane passes a base body 30 and reaches the polyurethane which was cured in the previous step. It is saturated with the base body 30, and is accumulated on the base body 30, and cured.

On the other hand, another method is proposed as a manufacturing process which uses a mandrel. That is, a base body is placed on an outer surface of a mandrel with space therebetween, and liquid polyurethane is impregnated into the upper surface of the base body 30 and the belt may be manufactured. In this case, the belt of which inner and outer surfaces comprises polyurethane may be manufactured by the repetition of impregnating the liquid polyurethane into the outer surface of the mandrel and the base body 30 and the upper surface of the base body 30, and curing it.

In this connection, the belt according to the present invention may have structures shown in Fig. 5 and Fig. 6. Characteristic structures of a shoe press belt for the press part of a papermaking machine are shown in Fig. 5 and Fig. 6. Fig. 5 shows an example having a water holding part 40 on an outer surface 11 to hold water from a wet paper web temporarily. This water holding part 40 comprises grooves or blind drill holes on the surface of polyurethane 21 forming the outer surface 11.
Moreover, Fig. 6 shows another example wherein an outer surface 11 comprises an exposed base body 30, and an inner surface 12 comprises polyurethane.

Here, a characteristic of the present invention is to use a hardener containing dimethylthiotoluenediamine (hereinafter called "DMTDA").
DMTDA does not need to be heated and melted like MBOCA which is conventionally used, since DMTDA is liquid at a room temperature. Therefore, the time and cost for manufacturing a belt may be reduced greatly by using this DMTDA since the process of melting a hardener which is needed in the case of using MB0CA is not necessary. Moreover, since urethane prepolymer and DMTDA may be mixed at a room temperature for manufacturing polyurethane, the danger of the work is greatly reduced and since curing occurs later in the case of using DMTDA than in the case of using MB0CA, a lot of time may be allowed for the work.

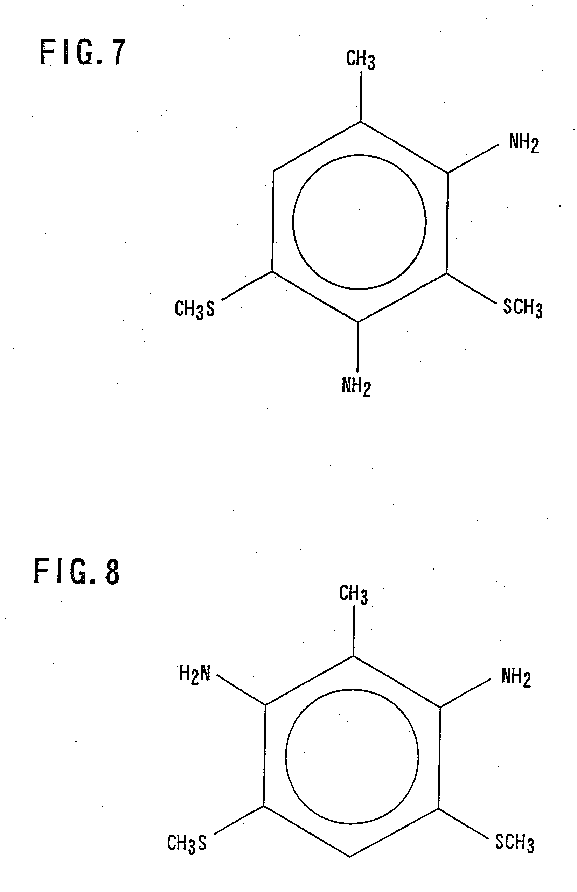

In this connection; DMTDA is 3,5-dimethylthio-2,4-toluenediamine shown in Fig. 7 or 3,5-dimethylthio-2,6-toluenediamine shown in Fig. 8. In this case, one kind or a mixture of two or more kinds of the compositions shown in Fig. 7 and Fig. 8 may be used.

On the other hand, a hardener which is used for the present invention only needs to contain DMTDA. That is, a polyol hardener using polytetramethylene glycol and polypropylene glycol, etc. or an aromatic diol hardener using hydroquinone diether, etc. or an aromatic diamine hardener using trimethylene bis (4-aminobenzoate), and diethyl toluenediamine, etc. may be used as a material which is mixed with DMTDA.
In this connection, It is preferable that the content of DMTDA in a hardener is not less than 50% of the weight of active hydrogen (H) of the hardener.

The isocyanate-terminated urethane prepolymer is obtained from the reaction of polyol and phenylene isocyanate derivative.

On this occasion, polyether polyol and polyester polyol may be used as a polyol.
Concretely, polyethylene glycol, polypropylene glycol, and polytetramethylene glycol, etc. may be used as a polyether polyol. On the other hand, polycaprolactone ester, polycarbonate, polyethylene adipate, polybutylene adipate, and polyhexene adipate, etc. may be used as a polyester polyol.
In this connection, only one kind of them or a mixture or polymerization of two or more kinds of them or a denatured one may be used.

Moreover, tolylene diisocyanate (hereinafter called "TDI"), diphenylmethane diisocyanate, m-xylene diisocyanate and naphthalene diisocyanate, etc. may be used as a phenylene isocyanate derivative. One kind or two or more kinds of these derivatives may be used.

As mentioned above, by using a hardener containing DMTDA, the present invention enables a belt to be manufactured in shorter time, at lower cost, more easily than the prior art.

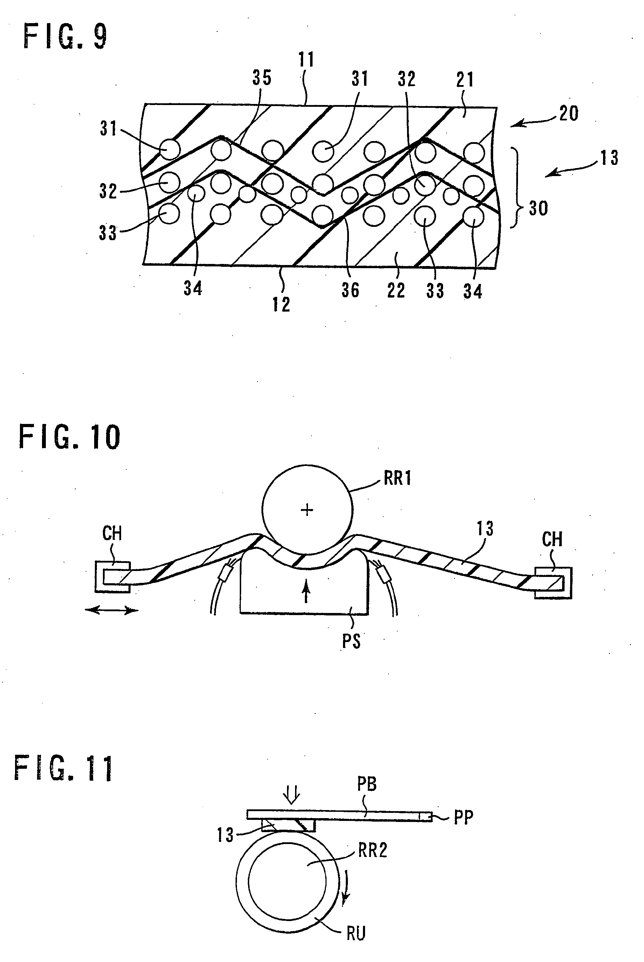

Next, preferable structures of a hardener for a belt for papermaking machine will be explained below based on Figs. 9-13.
First of all, the inventor of the present invention conducted experiments by changing an equivalent ratio (H/NCO) of active hydrogen group (H) of a hardener and isocyanate group (NCO) of urethane prepolymer.

A basic structure of samples prepared for the experiments will be explained based on Fig. 9. First of all, a triple woven fabric of a machine direction yarn material in an endless shape was prepared as a base body 30. Machine direction yarn materials 31, 32, and 33 comprise the woven fabric. Polyester monofilament of 0.35mm in diameter was used as an outer layer yarn material 31 and middle layer yarn material 32. Nylon monofilament of 0.35mm in diameter was used for an inner layer yarn material 33.
These machine direction yarn materials 31, 32, and 33, are woven at the density of 32 strings/5cm.

In this connection, polyester multifilament 34 having the fineness of 3000d is used as a machine direction yarn material besides yarn materials 31, 32, and 33 forming the foundation of these woven fabrics. Since this yarn material 34 is multifilament, it is made flat inside the base body 30. Therefore, it is possible to fix the position of impregnated liquid polyurethane relative to the base body 30 when the base body 30 is impregnated with liquid polyurethane in the following process. In this connection, the function of multifilament yarn material 34 in this base body 30 is well-known to those skilled in the art.
This multifilament yarn material 34 is also woven at the density of 32 strings/5cm.

Polyester monofilament of 0.40mm in diameter is used as cross machine direction yarn materials 35 and 36 in the base body 30. These cross machine direction yarn materials 35 and 36 are woven at the density of 96 strings/5cm.

The base body in an endless shape which is made in this way, is spanned between two rolls and stretched by the predetermined tension. In this connection, this roll is rotatable and the base body 30 advances in the direction of rotation of the rolls.
Liquid polyurethane is spread over the base body 30 and cured and polyurethane 20 is formed all over the base body 30 and samples are obtained by cutting off a part of it.

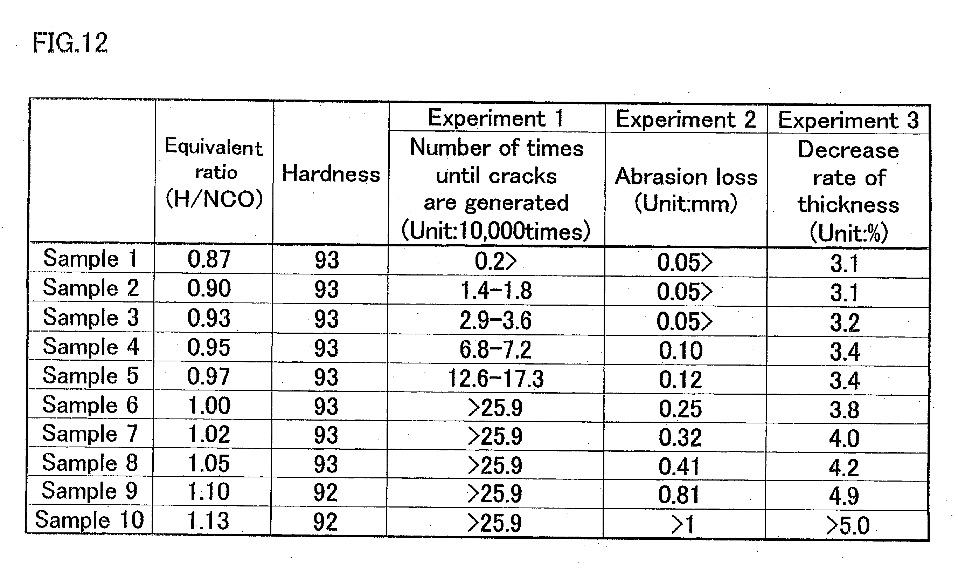

Concretely, this process is as follows:
Step 1: A mixture of Takenate L2390 (trade name) of Takeda Chemical Industries, LTD. and Takenate L2395 (trade name) at the ratio of 20:80 was prepared for a TDI-terminated urethane prepolymer. NCO content of the mixture was 5.69%.
Step 2: ETHACURE 300 (brand name) of Albemarle Corporation was prepared as a hardener containing DMTDA. This ETHACURE 300 is a mixture of 3,5-dimethylthio-2,4-toluenediamine and 3,5-dimethylthio-2,6-toluenediamine at the ratio of 80:20.
Step 3: The hardener of the step 2 and the prepolymer of the step 1 were mixed at the equivalent ratio (H/NCO) of 0.97, and liquid polyurethane was obtained.
Step 4: The liquid polyurethane of the step 3 was spread over the base body 30 and was impregnated into the multifilament yarn material 34. After the hardener and prepolymer in the hardener were reacted at the temperature of 20°C for an hour, they were heated for three hours at 100°C by a heating machine and cured.
Step 5: After polyurethane was cured, the surface was ground and its thickness was made 3.4mm and the inner and outer sides of the base body 30 were reversed.
Step 6: The urethane prepolymer of the step 1 and the hardener of the step 2 were mixed. In this connection, by changing the equivalent ratio (H/NCO) of this hardener and the urethane prepolymer, Samples 1-10 in Fig. 12 were obtained.
Step 7: The liquid polyurethane of the step 6 was spread over the base body obtained in the step 5 and impregnated. With this, the polyurethane which was impregnated into the base body 30 and cured in the step 4 and the liquid polyurethane which was spread this time were integrally bonded inside the base body 30. After the liquid polyurethane was laminated and the hardener and prepolymer in the liquid polyurethane were reacted at the temperature of 20°C for an hour, they were heated by the heating machine at 140°C for six hours and cured.
Step 8: After curing, the outer surface was ground, and the thickness was made 5.2mm uniformly.
Step 9: Grooves of 1.0mm in width, 1.0mm in depth, and 3.175mm in pitch were formed on the outer surface.
The samples were obtained by the above-mentioned process.

In this connection, experiments which will be described below were conducted on the samples. These experiments were conducted on the surface of the polyurethane obtained in the above-mentioned steps 6-9. This surface of the polyurethane will be hereinafter referred to as an "evaluation surface".

The following experiments were conducted on the evaluation surface of the samples which were obtained by the above-mentioned process.
Experiment 1: Crack test
Experiment 2: Abrasion test
Experiment 3: Permanent set test

The apparatus used in the Experiment 1 is shown in Fig. 10. In this apparatus, both ends of an experiment piece 13 is held by clamp hands CH and CH and the clamp hands CH and CH may be shuttled in the direction of width in an interlocking way.
In this connection, the tension put on the experiment piece 13 is 3kg/cm and the shuttling speed is 40cm/s.
The experiment piece 13 is pressurized by a rotating roller RR1 and press shoe PS. In this connection, the press shoe PS moves in the direction of the rotating roller RR, and the experiment piece 13 is pressurized. In this connection, this pressure is 36kg/cm².
How many times the experiment piece was shuttled in this apparatus until cracks occurred was measured.
In this connection, the evaluation surface of the experiment piece was on the rotating roller RR1.

The apparatus used in the Experiment 2 is shown in Fig. 11. This apparatus comprises a pivot part PP on the one end, a press board PB on the other end below which an experiment piece 13 may be attached, and a rotating roller RR2 provided at the position corresponding to the experiment piece 13. In this connection, a rubbing unit RU is provided in the outer surface of a rotating roller RR2.
The experiments were conducted in the condition where the apparatus was driven for 10 minutes at the pressure of 6kg/cm, at the rotating speed of the rotating roller RR2 of 100m/minute.
The experiment piece 13 was provided on the press board PB in the way the evaluation surface of the experiment piece 13 is in contact with the rubbing unit RU.

The Experiment 3 was conducted in the following condition.
The evaluation surface of the experiment piece was pressurized at 80kg/cm², for 22 hours, at the temperature of 70°C. The thickness after the lapse of 30 minutes since pressure was released was measured. The extent of the permanent set (%) was obtained by dividing the difference between the thicknesses before and after the experiment by the thickness before the experiment and multiplying it by 100.

The results of the Experiments 1-3 for the Samples 1-10 are shown in Fig. 12. The following facts were found out from the results.
In the case where H/NCO was less than 0.90, it was known that cracks were caused at the early stage and it had a difficulty of being used as a belt for a papermaking machine.
In the case where H/NCO was between 0.90 and 1. 00 (not including 1.00), it was found out that they have well-balanced properties for a belt. Especially, it was found out that when the polyurethane with H/NCO in this range was used in the side of a belt 10 having a water holding part 40 shown in Fig. 5, the results of the Experiment 2 (abrasion loss) and Experiment 3 (decrease rate of thickness) were excellent.
That is, since the abrasion and permanent set scarcely occurs, the configuration of the water holding part 40 may be maintained and the removing water capability may be maintained for a long time.
On the other hand, the polyurethane with H/NCO in this range is inferior in crack resistance to the polyurethane with H/NCO in the range of 1.00 to 1.10 which will be explained below. However, since the belt for papermaking machine having cracks is not necessarily unusable, it may be said that this polyurethane has the adequate crack resistance for the belt.

In the case where H/NCO was between 1.00 and 1.10, it was found out that crack resistance was excellent. On the other hand, it was found out from the results of the Experiment 2 that it was worn out easily. In addition, it was known from the results of the Experiment 3 that the decrease rate of thickness was high, and the groovees disappeared easily due to the permanent set.
Therefore, it was found out that although the polyurethane with H/NCO in this range was inferior in the total quality to the polyurethane with H/NCO in the range of 0.90 to 1.00 (not including 1.00), it functioned effectively for the belt having high crack resistance which was demanded for the structure of a papermaking machine or the running condition of the machine.
In the case where H/NCO was more than 1.10, it was confirmed from the results of Experiments 2, 3 that it did not have adequate durability for a belt.

In this connection, it may be guessed from the experiment results that when the equivalent ratio is large, the molecular weight of the polyurethane decreases and crosslinking between molecules does not occur easily and intertwinement and bonding of molecules are weakened and molecules are stripped off easily and the abrasion becomes large.
In addition, it is thought that permanent set worsens too since the gap between molecular chains becomes large.

Next, the curing condition of liquid polyurethane was changed, and experiments were conducted. Samples used in the experiments will be explained below. First of all, the base body 30 of Fig. 9 was prepared and spanned between two rolls, stretched by the predetermined tension.

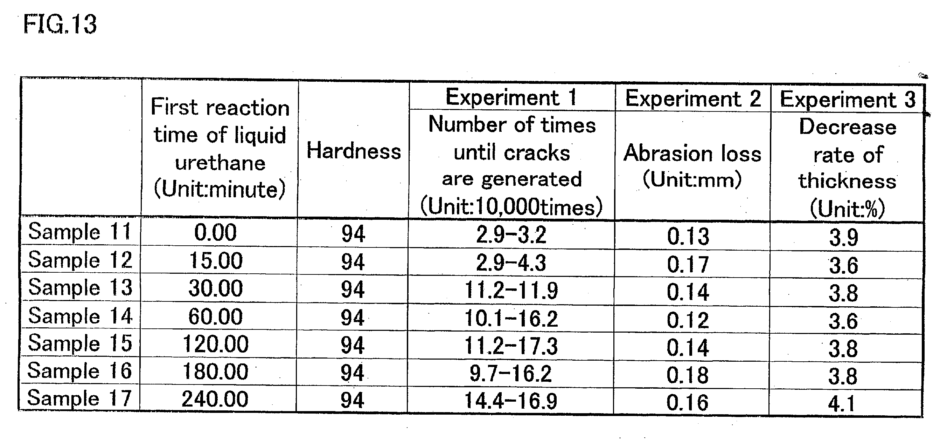

The sample was obtained by the following process:
Step 1: A mixture of Adiprene L100 (trade name) of Uniroyal Chemical Company and Adiprene L167 (trade name) at the ratio of 70:30 was prepared for a TDI-terminated urethane prepolymer. NCO content of the mixture was 4.73%.
Step 2: ETHACURE 300 (trade name) of Albemarle Corporation was prepared as a hardener containing DMTDA.
Step 3: The hardener of the step 2 and the prepolymer of the step 1 were mixed at the equivalent ratio (H/NCO) of 0.97, and liquid polyurethane was obtained.
Step 4: The liquid polyurethane of the step 3 was spread over the base body 30 and was impregnated into the multifilament yarn material 34. Immediately thereafter, they were heated for three hours at 105°C by a heating machine and cured.
Step 5: After polyurethane was cured, the surface was ground and its thickness was made 3.4mm and the inner and outer sides of the base body 30 were reversed.
Step 6: A mixture of Adiprene L100(trade name) and Adiprene L167 (trade name) of Uniroyal Chemical Company at the ratio of 10:90 was prepared for a TDI-terminated urethane prepolymer. NCO content of the mixture was 5.99%.
Step 7: ETHACURE 300 (trade name) of Albemarle Corporation was prepared as a hardener containing DMTDA.
Step 8: The hardener of the step 7 and the prepolymer of the step 6 were mixed at the equivalent ratio (H/NCO) of 0.97, and liquid polyurethane was obtained.
Step 9: The liquid polyurethane of the step 8 was spread over the base body 30 obtained in the step 5 and impregnated. With this, the polyurethane which was impregnated into the base body 30 and cured in the step 4 and the liquid polyurethane which was spread this time were integrally bonded inside the base body 30. Thereafter, the liquid polyurethane was laminated.
   Here, the hardener and prepolymer in the liquid polyurethane were reacted at the temperature of 20°C for a predetermined time. Samples 11-17 in Fig. 13 were obtained by changing the time for the reaction.
Step 10: After the predetermined time in the step 9 passed, they were heated by the heating machine at 110°C for an hour and thereafter they were heated at 140°C for six hours again and cured.
Step 11: After curing, the outer surface was ground, and the thickness was made 5.0mm uniformly.
Step 12: Grooves of 1.0mm in width, 1.0mm in depth, and 3.175mm in pitch were formed on the outer surface.
The samples were obtained by the above-mentioned process.

Experiments were conducted on the experiment pieces obtained from this process with the same apparatus and method as the above-mentioned Experiments 1-3. The results are shown in Fig. 13.
In this connection, the evaluation surface of the experiment pieces is a surface of the polyurethane obtained in the above-mentioned steps 6-12

As a result, it was found out that when the non-heating reaction time immediately after the liquid urethane was made in the above-mentioned step 6 was not more than 30 minutes, they were not suitable for a belt for a papermaking machine since cracks were generated soon.
It may be guessed that this is because an intense extension reaction of the molecular chain in the liquid urethane takes place at the low temperature, and a crosslinking reaction increases as the temperature rises.

Fig. 12 shows experiment results to determine the optimum polyurethane for a belt, and Fig. 13 shows experiment results to determine the optimum manufacturing conditions of the polyurethane for a belt.
Both are related to each other closely in obtaining an excellent belt for a papermaking machine. That is, by producing the optimum polyurethane which was determined in Fig. 12 in the method which was determined in Fig. 13, a more excellent belt for a papermaking machine may be obtained.

## Claims

1. A belt for a papermaking machine comprising a base body and polyurethane, **characterized in that** said polyurethane comprises an isocyanate-terminated urethane prepolymer and a hardener containing a dimethylthiotoluenediamine and the equivalent ratio of an active hydrogen group of said hardener and an isocynate group of said urethane prepolymer in said polyurethane is in the range of 0.9 to 1.10.

2. A manufacturing method of a belt for a papermaking machine, comprising steps of manufacturing a base body, mixing an isocyanate-terminated urethane prepolymer and a hardener containing a dimethylthiotoluenediamine for obtaining liquid polyurethane such that the equivalent ratio of an active hydrogen group of said hardener and an isocyanate group of said urethane prepolymer in said polyurethane is in the range of 0.9 to 1.10 and spreading said liquid polyurethane over said base body, and curing it.

3. A manufacturing method of a belt for a papermaking machine as claimed in claim 2, wherein after mixing said urethane prepolymer and hardener, both are reacted for not less than 30 minutes at the temperature of 10 to 60°C and thereafter, both are reacted at the temperature of 100 to 150°C.
